(19) Europäisches Patentamt
European Patent Office
Office européen des brevets

(11) **EP 2 300 728 B1**

(12) **FASCICULE DE BREVET EUROPEEN**

(45) Date de publication et mention de la délivrance du brevet:
**24.07.2013 Bulletin 2013/30**

(21) Numéro de dépôt: **09800110.0**

(22) Date de dépôt: **13.05.2009**

(51) Int Cl.:
$F01D\ 5/06^{(2006.01)}$  $F16D\ 1/033^{(2006.01)}$

(86) Numéro de dépôt international:
**PCT/FR2009/000551**

(87) Numéro de publication internationale:
**WO 2010/010237 (28.01.2010 Gazette 2010/04)**

(54) **PROCEDE POUR AUGMENTER LE COEFFICIENT D'ADHERENCE ENTRE DEUX PIECES SOLIDAIRES EN ROTATION D'UN ROTOR**

VERFAHREN ZUR ERHÖHUNG DER KRAFTSCHLUSSSWERT ZWISHEN ZWEI ZUSAMMENROTIERENDE TEILE

METHOD FOR INCREASING THE COEFFICIENT OF ADHESION BETWEEN TWO PARTS ROTATING AS ONE WITH A ROTOR

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **23.07.2008 FR 0804194**

(43) Date de publication de la demande:
**30.03.2011 Bulletin 2011/13**

(73) Titulaire: **Snecma**
**75015 Paris (FR)**

(72) Inventeurs:
• **DESSOLY, Vincent**
**77550 Moissy-Cramayel cedex (FR)**

• **MONS, Claude, Marcel**
**77550 Moissy-Cramayel Cedex (FR)**
• **VIGUERA SANCHO, Ana**
**77550 Moissy-Cramayel Cedex (FR)**

(74) Mandataire: **Ramey, Daniel et al**
**Ernest Gutmann - Yves Plasseraud S.A.S.**
**3, rue Auber**
**75009 Paris (FR)**

(56) Documents cités:
**DE-U1- 8 625 580    US-A- 2 879 092**

## Description

La présente invention concerne un procédé pour augmenter le coefficient d'adhérence entre deux pièces solidaires en rotation d'un rotor, par exemple un rotor de turbomachine.

Le document US-A-2,879,092 décrit un dispositif de couplage d'arbres.

Un rotor de turbomachine comprend en général plusieurs disques, chacun de ces disques comportant une bride annulaire qui est appliquée sur une bride annulaire d'un disque adjacent, et qui est fixée à celle-ci par boulonnage, c'est-à-dire au moyen d'ensembles vis-écrou. Les vis sont parallèles à l'axe de rotation du rotor et passent à travers des orifices des brides, ces vis étant régulièrement réparties sur une circonférence centrée sur l'axe du rotor.

En fonctionnement, le couple de rotation est transmis d'un disque de rotor à l'autre par l'intermédiaire des brides et des vis, cette transmission se faisant principalement par cisaillements et par frottements. Les déplacements relatifs des brides par glissement entraînent des surcontraintes importantes dans les vis et sur les bords des orifices de passage des vis des brides, par appui délocalisé, et se traduit par une diminution de la durée de vie des brides et donc du rotor.

Une solution à ce problème consiste à augmenter le serrage des écrous et donc le serrage des brides entre elles, ce qui implique une augmentation du diamètre et/ou du nombre des vis de fixation des brides. Cependant, cette solution n'est pas toujours possible en pratique, notamment pour des raisons d'encombrement ou de résistance mécanique à la compression du matériau des disques, et elle n'est pas satisfaisante car elle entraîne une augmentation significative de la masse du rotor, toujours préjudiciable en aéronautique, et une augmentation des contraintes dans les disques (les orifices de passage des vis de fixation étant plus proches les uns des autres et les efforts centrifuges étant plus importants).

L'invention a notamment pour but d'apporter une solution simple, efficace et économique au problème précité de la technique antérieure, en favorisant la transmission du couple de rotation entre les brides par frottement plutôt que par cisaillement, et en limitant les déplacements relatifs des brides.

Elle propose à cet effet un procédé pour augmenter le coefficient d'adhérence entre deux pièces solidaires en rotation d'un rotor, en particulier de turbomachine, ces pièces étant en appui l'une contre l'autre par des faces d'appui et fixées l'une à l'autre par boulonnage, caractérisé en ce qu'il comprend les étapes consistant à usiner par fraisage au moins une des faces d'appui de façon à modifier son état de surface et sa rugosité, puis à recouvrir la ou chaque face usinée d'une couche mince d'un matériau dur et à fort coefficient de frottement.

Le procédé selon l'invention comprend deux étapes essentielles successives : une étape de fraisage de la face d'appui de la ou de chaque pièce pour modifier sa rugosité, et une étape de dépôt sur la face usinée d'une couche mince protectrice d'un matériau dur et à fort coefficient de frottement.

Ce procédé permet d'augmenter de façon contrôlée le coefficient d'adhérence entre les deux pièces. On a déjà proposé d'augmenter la rugosité de pièces dans ce type d'assemblage par sablage, généralement au corindon ou à l'alumine. Cependant, cette technique ne permet pas de maîtriser le coefficient d'adhérence final des pièces. La morphologie des faces d'appui est un point majeur déterminant le coefficient de frottement, et cette technique ne permet pas d'obtenir des morphologies précises et reproductibles. Par ailleurs, ce sablage n'est pas suivi d'un traitement complémentaire consistant à déposer un matériau dur de protection, garantissant la pérennité de la rugosité obtenue lors de la compression due au serrage et au frottement des pièces entre elles.

L'étape de fraisage du procédé selon l'invention est avantageusement réalisée au moyen d'une fraise à grande avance de façon à former sur la face d'appui un relief particulier constitué d'une alternance de crêtes et de sillons. La couche mince de matériau dur permet de protéger ce relief et d'éviter que celui-ci ne soit modifié ou altéré par écrasement lors de la fixation et du serrage des pièces, ou par frottement en fonctionnement. La couche mince a par ailleurs une faible épaisseur pour ne pas modifier l'état de surface obtenu par fraisage. Le matériau de la couche mince est avantageusement une céramique, et par exemple du nitrure de titane. Le dépôt de la couche mince sur la face usinée peut être réalisé par dépôt en phase gazeuse ou en phase vapeur.

Préférentiellement, les faces d'appui des deux pièces sont usinées par fraisage, les crêtes et les sillons des faces d'appui étant formés dans des sens opposés de façon à être sensiblement complémentaire et à augmenter le coefficient de frottement entre les pièces.

Les faces d'appui sont par exemple des faces annulaires qui s'étendent autour de l'axe de rotation du rotor.

Le fraisage peut être réalisé en effectuant une ou plusieurs passes sur une ou sur chaque face d'appui.

Au moins une passe circonférentielle est par exemple effectuée en déplaçant la fraise sur une des faces d'appui, autour de l'axe de rotation du rotor, dans le sens horaire. Au moins une passe circonférentielle peut également être effectuée en déplaçant la fraise sur l'autre face d'appui, autour de l'axe de rotation du rotor, dans le sens anti-horaire. Plusieurs passes circonférentielles concentriques et de diamètres croissants ou décroissants peuvent être réalisées sur une ou sur chaque face.

En variante, plusieurs passes radiales sont effectuées en déplaçant la fraise sur une des faces d'appui, dans des directions sensiblement radiales par rapport à l'axe de rotation du rotor, les unes à côté des autres de façon à usiner tout le pourtour de la face. Plusieurs passes tangentielles peuvent également être effectuées en déplaçant la fraise sur la face usinée, dans des directions sensiblement tangentielles par rapport à la pièce.

Le fraisage est réalisé avec une fraise dont l'avance par dent fz peut être déterminée en fonction de la rugosité Ra recherchée pour la ou chaque face d'appui et le rayon R de la fraise, selon la formule $fz = \sqrt{(18\sqrt{3})} * \sqrt{(Ra*R)}$. La rugosité ou rugosité arithmétique Ra s'entend comme la moyenne mathématique des hauteurs des creux et des sillons. L'avance par dent fz est par exemple comprise entre 0,01 et 0,3mm/dent, de préférence entre 0,05 et 0,1 mm/dent, et est par exemple de 0,07mm/dent.

Dans un cas particulier de mise en oeuvre du procédé selon l'invention où les pièces sont des disques de rotor d'une turbomachine et comportent chacun une bride annulaire appliquée et fixée par boulonnage sur une bride annulaire d'un autre disque, le procédé comprend les étapes consistant à usiner et recouvrir d'une couche mince au moins une des faces d'appui de ces brides.

Le procédé peut comprendre, avant l'étape de fraisage de la face d'appui d'une bride, une étape de tournage de finition de cette bride, et après l'étape de recouvrement de la face d'appui usinée, une étape supplémentaire de fraisage de la bride pour la réalisation de festons ou de créneaux sur cette bride.

On a constaté, dans le cas d'un rotor de compresseur haute-pression d'une turbomachine, réalisé en titane, que l'accroissement d'un facteur 2 du coefficient de frottement ou d'adhérence entre les brides du rotor permet soit d'augmenter la durée de vie des brides et donc du rotor d'un facteur 1,3, pour un même couple de serrage des vis, soit de réduire de 10% le nombre de vis, soit encore de diminuer de plus de 10% le nombre de vis si ces dernières sont surdimensionnées.

La présente invention concerne également un disque de rotor, en particulier d'une turbomachine, comportant une bride de fixation présentant une face annulaire d'appui, cette face comportant une alternance de crêtes et de sillons qui sont recouverts par une couche mince d'un matériau dur à fort coefficient de frottement. La profondeur des sillons par rapport au sommet des crêtes est par exemple de l'ordre de 1 à 2$\mu$m.

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :

- la figure 1 est une vue schématique partielle en coupe axiale d'une liaison boulonnée de deux disques de rotor d'une turbomachine,
- la figure 2 est une vue très schématique de la face d'appui d'une des brides de la figure 1, sur laquelle est mis en oeuvre le procédé selon l'invention,
- la figure 3 représente de manière très schématique une étape de fraisage du procédé selon l'invention,
- la figure 4 représente de manière très schématique une étape de dépôt d'une couche mince du procédé selon l'invention,
- les figures 5 et 6 sont des vues très schématiques en coupe des faces d'appui des brides de la figure 1, après traitement de ces faces par le procédé selon l'invention,
- la figure 7 est une vue très schématique de la face d'appui d'une bride, sur laquelle est mis en oeuvre une variante du procédé selon l'invention,
- la figure 8 est une vue très schématique de la face d'appui de la bride de la figure 7, à la fin du procédé selon l'invention.

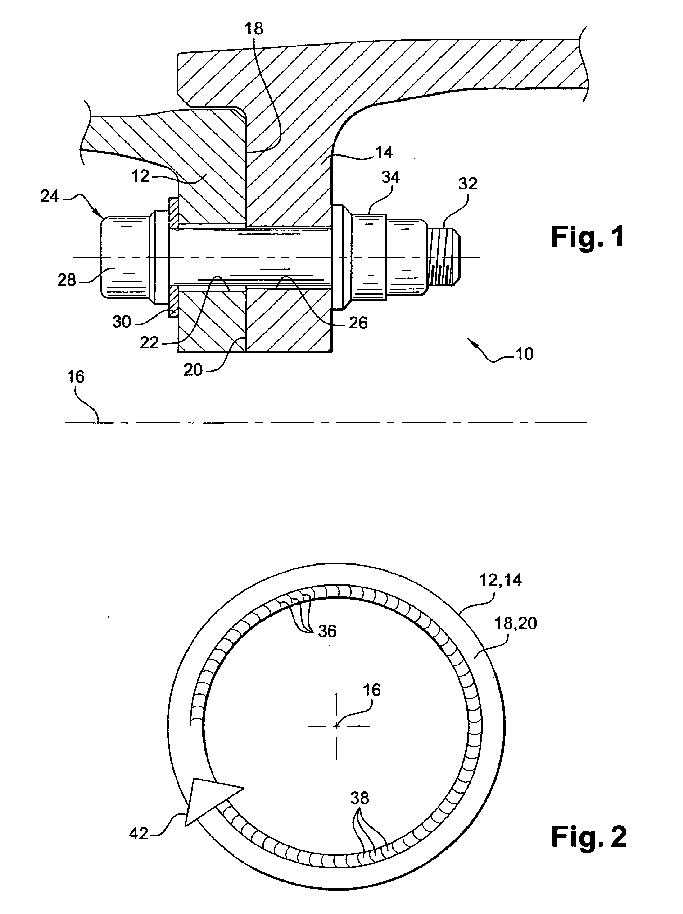

On se réfère d'abord à la figure 1 qui représente en coupe axiale une liaison boulonnée 10 entre la bride annulaire 12 d'un premier disque de rotor et la bride annulaire 14 d'un second disque de rotor d'une turbomachine, les disques n'étant pas représentés dans le dessin pour plus de clarté. Les disques de rotor sont par exemple réalisés en alliage à base de nickel et de cobalt.

Les brides 12, 14 s'étendent autour de l'axe 16 de rotation du rotor et sont orientées radialement vers l'intérieur par rapport à cet axe. Elles sont appliquées et serrées l'une sur l'autre par des ensembles vis-écrou.

La bride 12 comporte une face radiale ou latérale 18 d'appui sur une face latérale 20 correspondante de la bride 14.

La bride 12 comporte des orifices axiaux 22 de passage des vis 24 qui sont régulièrement répartis autour de l'axe de rotation 16, et qui sont alignés axialement avec des orifices 26 de la bride 14. Le nombre de vis 24 est par exemple compris entre 20 et 40.

Une vis 24 est engagée axialement (de la gauche vers la droite sur le dessin) dans chaque orifice 22 de la bride 12 et dans l'orifice 26 correspondant de la bride 14, jusqu'à ce que sa tête 28 vienne en appui axial sur une face latérale de la bride 124 opposée à la face latérale 18, ou sur une rondelle 30 intercalée axialement entre cette face et la tête de la vis. Chaque vis 24 comprend une partie filetée 32 recevant un écrou 34 destiné à venir en appui axial sur une face latérale de la bride 12 opposée à la face latérale 20.

En fonctionnement, le couple et les vibrations en rotation sont transmis d'un disque de rotor à l'autre par cisaillement et par frottement, ce qui génère des contraintes importantes dans les vis 24 et sur les bords des orifices 22, 26 de passage de ces vis.

La présente invention a pour objet un procédé de traitement des faces d'appui 18, 20 des brides 12, 14 qui permette d'augmenter le coefficient d'adhérence ou de frottement entre ces brides, et ainsi à favoriser la transmission du couple et des vibrations en rotation par frottement des brides entre elles plutôt que par cisaillement.

Le procédé selon l'invention comprend deux étapes : la première consistant à usiner par fraisage au moins une des faces d'appui 18, 20 des brides de façon à modifier son état de surface et sa rugosité, et la seconde consistant à recouvrir la face usinée d'une couche mince d'un matériau dur à fort coefficient de frottement.

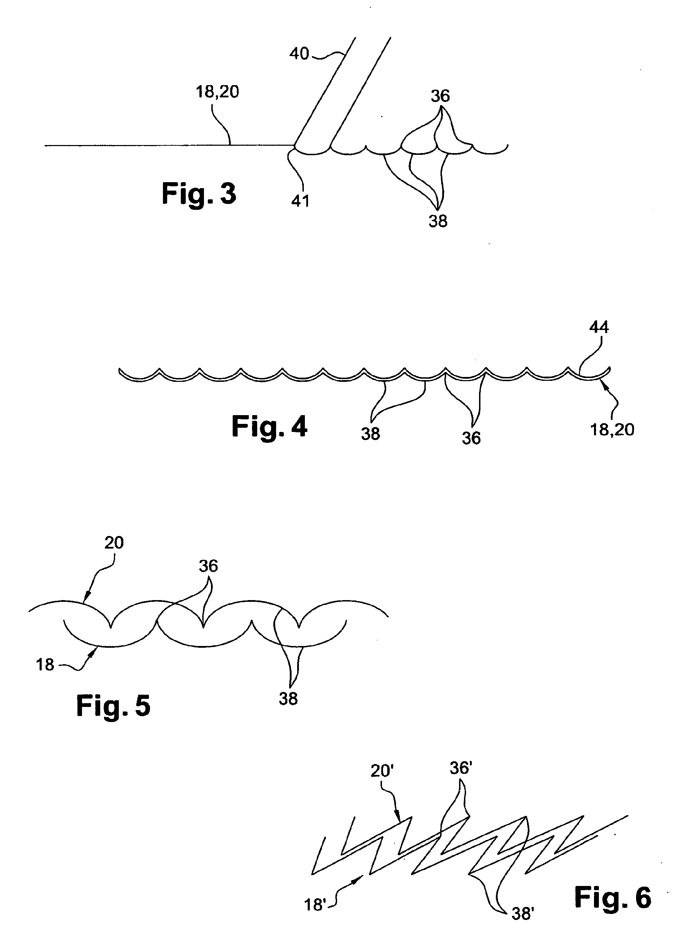

La première étape schématiquement représentée aux figures 2 et 3 consiste pour l'essentiel à utiliser une fraise 40 à grande avance et à déplacer cette fraise sur la face d'appui 18, 20 de façon à y former un relief en dents de scie comprenant une alternance de crêtes 36 et de sillons 38.

Dans l'exemple représenté en figure 2, la fraise est déplacée en direction circonférentielle sur la face d'appui 18, 20 dans le sens horaire (flèche 42). La passe de la fraise 40 est ici située au voisinage de la périphérie interne de la face 18, 20. Plusieurs passes circonférentielles et de diamètres croissants sont alors nécessaires pour usiner l'intégralité de la face d'appui 18, 20, le nombre de ces passes étant notamment fonction du diamètre de la fraise et de la dimension radiale de la face d'appui 18, 20.

La fraise utilisée pour cette opération peut être une fraise monobloc ou une fraise à surfacer à plaquettes. Elle peut être réalisée en carbure, céramique, ARS, et/ou CBN, et peut également être recouverte d'un revêtement quelconque.

A titre d'exemple, la fraise a un diamètre de 16mm, un bec 41 présentant un angle vif ou un bord arrondi de rayon inférieur à 0,1mm, un nombre de dents égal à 4, et un angle d'hélice de 45° environ.

Les paramètres d'utilisation de la fraise sont par exemple les suivants, dans le cadre du fraisage de la face d'appui d'une bride réalisée en Inconel 718 : vitesse de coupe vc = 25m/min, engagement axial ap = 0,3mm, et avance par dent fz = 0,07mm.

De manière générale, l'avance par dent de la fraise peut être déterminée par la formule suivante $fz = \sqrt{(18\sqrt{3})} * \sqrt{(Ra*R)}$, dans lequel Ra est la rugosité arithmétique recherchée de la face d'appui 18, 20 et R est le rayon de la fraise en bout. La rugosité arithmétique est par exemple de 1,6μm.

Dans le cas où les faces d'appui 18, 20 des deux brides 12, 14 sont usinées par fraisage, le sens de déplacement de la fraise sur une première face d'appui 18, 20 est de préférence opposé au sens de déplacement de la fraise sur la seconde face d'appui 20, 18 afin que les reliefs usinés sur ces faces soient sensiblement complémentaires l'un de l'autre, ce qui améliore le coefficient de frottement entre ces surfaces. Dans l'exemple de la figure 2, la fraise est déplacée dans le sens horaire sur une des faces, et dans le sens anti-horaire sur l'autre face.

Les figures 5 et 6 représentent des vues très schématiques en coupe des faces d'appui 18, 20 des brides. Dans les deux cas, les reliefs des faces d'appui sont configurés de façon à ce que, au serrage des brides 12 ,14, les crêtes 36 d'une première face s'engagent dans les sillons 38 de la seconde face, et inversement. Dans le cas de la figure 6, les pics 36' d'une face d'appui 18', 20' ont des formes sensiblement complémentaires des creux 38' de l'autre dace d'appui, et respectivement.

La seconde étape du procédé selon l'invention est schématiquement représentée en figure 4 et consiste à déposer une couche mince protectrice 44 sur la face d'appui 18, 20 usinée.

La couche mince 44 recouvre l'intégralité du relief et donc les crêtes et les sillons des faces d'appui, et a une faible épaisseur pour ne pas modifier l'état de surface des faces d'appui obtenu par fraisage. Cette épaisseur est par exemple de l'ordre de 1 à 2μm environ.

La couche mince 44 est formée d'un matériau très dur de façon à empêcher l'écrasement du relief de la face d'appui lors du serrage des brides entre elles, et à limiter l'usure de ces reliefs par frottement en fonctionnement. Ce matériau présente par ailleurs un fort coefficient de frottement, en particulier contre lui-même.

Le dépôt de la couche mince 44 peut être réalisé par n'importe quelle technique appropriée et par exemple par dépôt physique en phase gazeuse (PVD) ou dépôt interne en phase vapeur (IVD).

Le dépôt d'une couche mince par ce type de technique peut être réalisé sur des substrats de différentes natures tels que des substrats en acier, en alliage à base de nickel ou de titane, etc. Ce dépôt permet de conserver les propriétés mécaniques et l'adhérence de ces substrats (disques), car les conditions de mise en oeuvre de ce dépôt (en particulier de température) sont compatibles avec les traitements thermiques des alliages constituant les substrats et même certains états de précontraintes obtenus par traitement mécanique de ces substrats (par exemple par grenaillage ou déformation à froid).

A titre d'exemple, le matériau déposé en couche mince est un revêtement stoechiométrique de nitrure de titane. Ce dépôt peut être réalisé à des températures de l'ordre de 300 à 400°C, ce qui est compatible avec les traitements thermiques des alliages précités et est en dessous des seuils de relaxation des précontraintes.

La dureté du nitrure de titane est supérieure à 1000HV. Il présente une excellente adhérence et un fort coefficient de frottement sur lui-même. Du fait de la nature du matériau (céramique), ces propriétés sont stables dans tout le domaine de températures des disques de rotor d'une turbomachine (jusqu'à 750°C et au delà). Le coefficient de frottement passe ainsi de 0,3-0,6 pour un contact métal/métal à un coefficient de frottement de 0,9 environ.

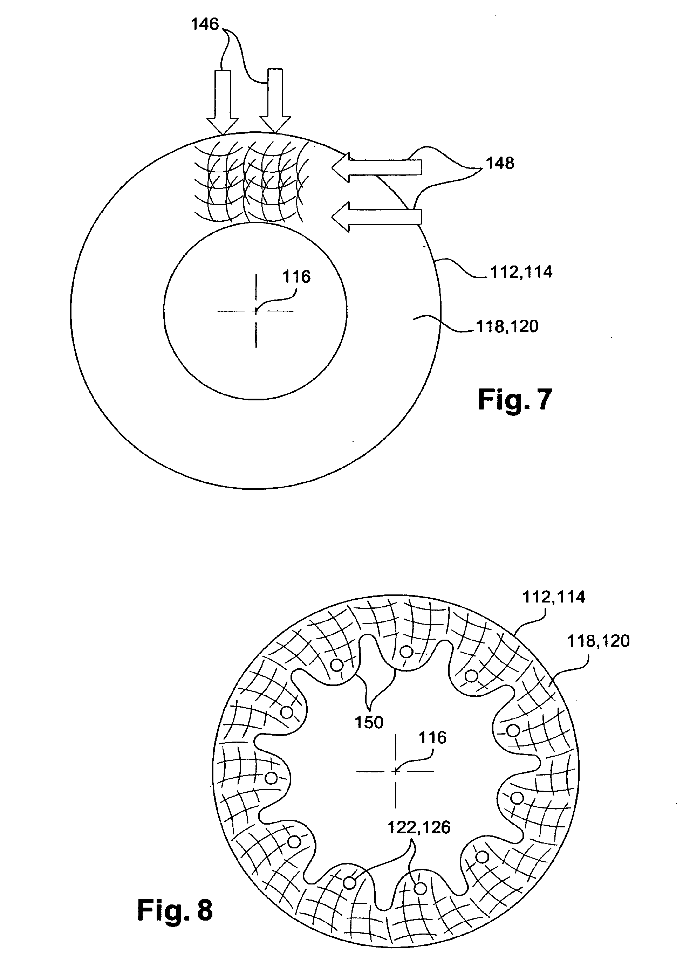

On se réfère désormais aux figures 7 et 8 qui représentent une variante de réalisation du procédé selon l'invention.

Les références 118, 120 désignent les faces d'appui de deux brides 112, 114 de disques de rotor, les brides 112, 114 ayant des dimensions radiales supérieures à celles de la figure 2.

Le procédé diffère de celui précédemment décrit en ce que le fraisage de la ou de chaque face d'appui est réalisé en déplaçant la fraise en direction radiale et tangentielle et non pas en direction circonférentielle.

Plusieurs passes radiales adjacentes les unes aux autres sont effectuées en déplaçant la fraise radialement du bas vers le haut ou du haut vers le bas sur toute la circonférence de la ou de chaque face d'appui 18, 20. Le nombre de ces passes dépend notamment du diamètre de la bride et de celui de la fraise. Plusieurs passes tangentielles sont ensuite effectuées sur tout le pourtour de la face d'appui de façon à former des crêtes et des sillons perpendiculairement aux crêtes et aux sillons formés par les passes radiales. On réalise ainsi un quadrillage de passes qui entraîne la formation d'un réseau de pics de matière sur la face d'appui, ces pics de matière correspondant à l'intersection des crêtes formées par les passes radiales avec les crêtes formées par les passes tangentielles.

Dans un cas particulier de réalisation du procédé selon l'invention, les deux étapes précitées sont précédées d'une étape consistant à effectuer un usinage de semi-finition des brides par tournage. Ces étapes sont ensuite suivies d'une autre étape de fraisage des brides de façon à former sur sa périphérie interne un bord festonné ou crénelé. Les festons 150 ou créneaux s'étendent radialement vers l'intérieur et sont régulièrement répartis autour de l'axe 116 de rotation du rotor. Des orifices 122, 126 de passage des vis de fixation des brides peuvent être ensuite percés dans ces festons 150.

Les opérations précitées de fraisage et de dépôt d'une couche mince du procédé selon l'invention peuvent être précédées ou suivies par une étape de traitement mécanique (par exemple par grenaillage ou par déformation à froid), et/ou de traitement thermique (par détente ou retenu par exemple) des pièces, et en particulier des orifices et des festons des brides, en vue de l'amélioration de la durée de vie de ces pièces. Le choix des températures et des conditions de mise en oeuvre du dépôt de matériau dur doit prendre en compte les traitements thermiques et/ou mécaniques du matériau constituant les pièces à traiter. Il peut aussi prendre en compte l'état de précontrainte si les traitements sont mis en oeuvre avant dépôt. S'ils sont mis en oeuvre après le dépôt du matériau dur, les zones revêtues de ce matériau dur devront être protégées, par exemple par des masques.

**Revendications**

1. Procédé pour augmenter le coefficient d'adhérence entre deux pièces (12, 14) solidaires en rotation d'un rotor, en particulier de turbomachine, ces pièces étant en appui l'une contre l'autre par des faces d'appui (18, 20) et fixées l'une à l'autre par boulonnage, **caractérisé en ce qu'**il comprend les étapes consistant à usiner par fraisage au moins une des faces d'appui de façon à modifier son état de surface de maniere à augmenter sa rugosité, puis à recouvrir la ou chaque face usinée d'une couche mince (44) d'un matériau dur et à fort coefficient de frottement.

2. Procédé selon la revendication 1, **caractérisé en ce que** le fraisage de la face d'appui est réalisé avec une fraise (40) à grande avance de façon à former sur cette face une alternance de crêtes (36) et de sillons (38).

3. Procédé selon la revendication 2, **caractérisé en ce que** les faces (18, 20) d'appui des deux pièces sont usinées par fraisage, les crêtes et les sillons des faces d'appui étant formés dans des sens opposés.

4. Procédé selon l'une des revendications précédentes, **caractérisé en ce que** les faces d'appui (18, 20) sont annulaires et s'étendent autour de l'axe (16) de rotation du rotor.

5. Procédé selon l'une des revendications précédentes, **caractérisé en ce que** le fraisage est réalisé en effectuant une ou plusieurs passes sur la face d'appui (18, 20).

6. Procédé selon l'ensemble des revendications 4 et 5, **caractérisé en ce qu'**au moins une passe circonférentielle est effectuée en déplaçant la fraise (40) sur une des faces d'appui (18, 20), autour de l'axe (16) de rotation du rotor, dans le sens horaire (42).

7. Procédé selon la revendication 6 **caractérisé en ce qu'**au moins une passe circonférentielle est effectuée en déplaçant la fraise (40) sur l'autre face d'appui (20, 18), autour de l'axe (16) de rotation du rotor, dans le sens anti-horaire.

8. Procédé selon la revendication 6 ou 7, **caractérisé en ce que** plusieurs passes circonférentielles concentriques et de diamètres croissants ou décroissants sont réalisées sur la ou chaque face (18, 20).

9. Procédé selon l'ensemble des revendications 4 et 5, **caractérisé en ce que** plusieurs passes radiales (146) sont effectuées en déplaçant la fraise sur la ou chaque face d'appui (118, 120), dans des directions sensiblement radiales par rapport à l'axe (116) de rotation du rotor, les unes à côté des autres de façon à usiner tout le pourtour de la face.

10. Procédé selon la revendication 9, **caractérisé en ce que** plusieurs passes tangentielles (148) sont effectuées en déplaçant la fraise sur la ou chaque face usinée, dans des directions sensiblement tangentielles par rapport à la pièce.

11. Procédé selon l'une des revendications précédentes, **caractérisé en ce que** le fraisage est réalisé avec une fraise (40) dont l'avance par dent fz est déterminée en fonction de la rugosité Ra recherchée pour la ou chaque face d'appui (18, 20) et le rayon R de la fraise, selon la formule $fz = \sqrt{(18\sqrt{3})} * \sqrt{(Ra*R)}$.

**12.** Procédé selon l'une des revendications précédentes, **caractérisé en ce que**, les pièces étant des disques de rotor d'une turbomachine et comportant chacun une bride annulaire (12, 14) appliquée et fixée par boulonnage sur une bride annulaire de l'autre disque, le procédé comprend les étapes consistant à usiner et recouvrir d'une couche mince au moins une des faces d'appui de ces brides.

**13.** Procédé selon la revendication 12, **caractérisé en ce qu'**il comprend, avant l'étape de fraisage de la face d'appui d'une bride, une étape de tournage de finition de cette bride, et après l'étape de recouvrement de la face d'appui usinée, une étape supplémentaire de fraisage de la bride pour la réalisation de festons (150) ou de créneaux sur cette bride.

**14.** Procédé selon l'une des revendications précédentes, **caractérisé en ce que** les étapes de fraisage et de dépôt de la couche mince (44) sont précédées ou suivies d'une étape de traitement mécanique des pièces (12, 14), par exemple par grenaillage ou déformation à froid, et/ou de traitement thermique des pièces, par exemple par détente ou revenu.

**15.** Disque de rotor, en particulier d'une turbomachine, comportant une bride de fixation (12, 14) présentant une face annulaire d'appui (16, 18), cette face comportant une alternance de crêtes (36) et de sillons (38) qui sont recouverts par une couche mince (44) d'un matériau dur à fort coefficient de frottement.

**Patentansprüche**

**1.** Verfahren zum Erhöhen des Kraftschlussbeiwerts zwischen zwei drehfest miteinander verbundenen Teilen (12, 14) eines Rotors, insbesondere einer Turbomaschine bzw. eines Turbinentriebwerks, wobei sich diese Teile über Abstützflächen (18, 20) aneinander abstützen und durch Verschrauben aneinander befestigt sind, **dadurch gekennzeichnet, dass** es Schritte umfasst, die darin bestehen, zumindest eine der Abstützflächen durch Fräsen so zu bearbeiten, dass deren Oberflächenzustand verändert wird, so dass deren Rauheit erhöht wird, dann die bzw. jede bearbeitete Fläche mit einer dünnen Schicht (44) aus einem harten Material mit hohem Reibbeiwert zu überziehen.

**2.** Verfahren nach Anspruch 1, **dadurch gekennzeichnet, dass** das Fräsen der Abstützfläche mit einem Fräser (40) mit hohem Vorschub erfolgt, so dass auf dieser Fläche eine Wechselfolge von Erhebungen (36) und Vertiefungen (38) entsteht.

**3.** Verfahren nach Anspruch 2, **dadurch gekennzeichnet, dass** die Abstützflächen (18, 20) der beiden Teile fräsend bearbeitet werden, wobei die Erhebungen und die Vertiefungen der Abstützflächen in entgegengesetzten Richtungen gebildet werden.

**4.** Verfahren nach einem der vorangehenden Ansprüche, **dadurch gekennzeichnet, dass** die Abstützflächen (18, 20) ringförmig sind und um die Drehachse (16) des Rotors verlaufen.

**5.** Verfahren nach einem der vorangehenden Ansprüche, **dadurch gekennzeichnet, dass** das Fräsen mit einer oder mit mehreren Zustellungen an der Abstützfläche (18, 20) erfolgt.

**6.** Verfahren nach den Ansprüchen 4 und 5 zusammengenommen, **dadurch gekennzeichnet, dass** zumindest eine umfängliche Zustellung dadurch erfolgt, dass der Fräser (40) an einer der Abstützflächen (18, 20) um die Drehachse (16) des Rotors herum im Uhrzeigersinn (42) verlagert wird.

**7.** Verfahren nach Anspruch 6, **dadurch gekennzeichnet, dass** zumindest eine umfängliche Zustellung dadurch erfolgt, dass der Fräser (40) an der anderen Abstützfläche (20, 18) um die Drehachse (16) des Rotors herum im Gegenuhrzeigersinn verlagert wird.

**8.** Verfahren nach Anspruch 6 oder 7, **dadurch gekennzeichnet, dass** mehrere konzentrische umfängliche Zustellungen mit aufsteigenden bzw. absteigenden Durchmessern an der bzw. jeder Fläche (18, 20) erfolgen.

**9.** Verfahren nach den Ansprüchen 4 und 5 zusammengenommen, **dadurch gekennzeichnet, dass** mehrere radiale Zustellungen (146) nebeneinander dadurch erfolgen, dass der Fräser an der bzw. jeder Abstützfläche (118, 120) in im Wesentlichen radialen Richtungen bezüglich der Drehachse (116) des Rotors verlagert wird, so dass der gesamte Umfang der Fläche bearbeitet wird.

**10.** Verfahren nach Anspruch 9, **dadurch gekennzeichnet, dass** mehrere tangentiale Zustellungen (148) dadurch erfolgen, dass der Fräser an der bzw. jeder bearbeiteten Fläche in im Wesentlichen tangentialen Richtungen bezüglich des Teils verlagert wird.

**11.** Verfahren nach einem der vorangehenden Ansprüche, **dadurch gekennzeichnet, dass** das Fräsen mit einem Fräser (40) erfolgt, dessen Vorschub pro Zahn fz in Abhängigkeit von der für die bzw. jede Abstützfläche (18, 20) angestrebte Rauheit Ra und dem Radius R des Fräsers nach der Formel fz = $\sqrt{(18\sqrt{3})} * \sqrt{(Ra*R)}$ bestimmt wird.

**12.** Verfahren nach einem der vorangehenden Ansprüche, **dadurch gekennzeichnet, dass** bei Teilen, die Rotorscheiben einer Turbomaschine bzw. eines Turbinentriebwerks sind und jeweils einen ringförmigen Flansch (12, 14) aufweisen, der an einen ringförmigen Flansch der anderen Scheibe angesetzt und durch Verschraubung befestigt ist, das Verfahren Schritte umfasst, die darin bestehen, zumindest eine der Abstützflächen dieser Flansche spanend zu bearbeiten und mit einer dünnen Schicht zu überziehen.

**13.** Verfahren nach Anspruch 12, **dadurch gekennzeichnet, dass** es vor dem Schritt des Fräsens der Abstützfläche eines Flansches einen Schritt des Schlichtdrehens von diesem Flansch und nach dem Schritt des Überziehens der bearbeiteten Abstützfläche einen zusätzlichen Schritt des Fräsens des Flansches für die Ausbildung von Bögen (150) bzw. Nischen an diesem Flansch umfasst.

**14.** Verfahren nach einem der vorangehenden Ansprüche, **dadurch gekennzeichnet, dass** den Schritten des Fräsens und des Aufbringens der dünnen Schicht (44) ein Schritt der mechanischen Bearbeitung der Teile (12, 14) beispielsweise durch Kugelstrahlen, Kaltumformen und/oder ein Schritt der Wärmebehandlung der Teile beispielsweise durch Entspannen oder Anlassen vorausgehen bzw. diesen nachfolgen.

**15.** Rotorscheibe, insbesondere einer Turbomaschine bzw. eines Turbinentriebwerks, enthaltend einen Befestigungsflansch (12, 14), der eine ringförmige Abstützfläche (16, 18) aufweist, wobei diese Fläche eine Wechselfolge von Erhebungen (36) und Vertiefungen (38) aufweist, die mit einer dünnen Schicht (44) aus einem harten Material mit hohem Reibbeiwert überzogen sind.

**Claims**

**1.** A method of increasing the coefficient of adhesion between two rotor parts (12, 14) that are constrained together in rotation, in particular two turbomachine parts, the parts bearing one against the other via bearing faces (18, 20) and being fastened to each other by bolting, the method being **characterized in that** it comprises the steps consisting in machining at least one of the bearing faces by milling so as to modify its surface state and so as to increase its roughness, and then in coating the or each machined face in a thin layer (44) of a material that is hard and that has a high coefficient of friction.

**2.** A method according to claim 1, **characterized in that** the bearing face is machined with a high advance rate cutter (40) so as to form alternating crests (36) and furrows (38) in said face.

**3.** A method according to claim 2, **characterized in that** the bearing faces (18, 20) of the two parts are machined by milling, the crests and the furrows of the bearing faces being formed in opposite directions.

**4.** A method according to any preceding claim, **characterized in that** the bearing faces (18, 20) are annular and extend around the axis of rotation (16) of the rotor.

**5.** A method according to any preceding claim, **characterized in that** the milling is performed by effecting one or more passes over the bearing face (18, 20).

**6.** A method according to claims 4 and 5 taken together, **characterized in that** at least one circumferential pass is effected by moving the cutter (40) over one of the bearing faces (18, 20) about the axis of rotation (16) of the rotor in the clockwise direction (42).

**7.** A method according to claim 6, **characterized in that** at least one circumferential pass is effected by moving the cutter (40) over the other bearing face (20, 18) about the axis of rotation (16) of the rotor in the counterclockwise direction.

**8.** A method according to claim 6 or claim 7, **characterized in that** a plurality of concentric circumferential passes of increasing or decreasing diameter are effected on the or each face (18, 20).

**9.** A method according to claims 4 and 5 taken together, **characterized in that** a plurality of radial passes (146) are effected by moving the cutter over the or each bearing face (118, 120) in directions that are substantially radial relative to the axis of rotation (116) of the rotor, the passes being one beside another so as to machine around all of the face.

**10.** A method according to claim 9, **characterized in that** a plurality of tangential passes (148) are effected by moving the cutter over the or each machined face in directions that are substantially tangential relative to the part.

**11.** A method according to any preceding claim, **characterized in that** the milling is performed with a cutter (40) presenting an advance per tooth fz that is determined as a function of the roughness Ra desired for the or each bearing face (18, 20) and as a function of the radius R of the cutter, using the formula:

$$fz = \sqrt{(18\sqrt{3})} \times \sqrt{(Ra \times R)}$$

**12.** A method according to any preceding claim, **characterized in that** for parts constituted by rotor disks of a turbomachine each having an annular flange (12, 14) applied against an annular flange of the other disk and fastened thereto by bolting, the method comprises the steps consisting in machining at least one of the bearing faces of the flanges and coating it in a thin layer.

**13.** A method according to claim 12, **characterized in that** it includes, prior to the step of milling the bearing face of a flange, a step of performing finishing turning on said flange, and after the step of coating the machined bearing face, it includes an additional step of milling the flange to provide festoons (150) or crenellations in the flange.

**14.** A method according to any preceding claim, **characterized in that** the steps of milling and depositing the thin film (44) are preceded or followed by a step of treating the parts (12, 14) mechanically, e.g. by cold deformation or shot blasting, and/or by heat-treating the parts, e.g. by expansion or tempering.

**15.** A rotor disk, in particular for a turbomachine, including a fastener flange (12, 14) presenting an annular bearing face (16, 18), said face including alternating crests (36) and furrows (38) that are coated in a thin layer (44) of a hard material having a high coefficient of friction.

**Fig. 1**

**Fig. 2**

**Fig. 3**

**Fig. 4**

**Fig. 5**

**Fig. 6**

146

148

112,114

116

118,120

**Fig. 7**

112,114

118,120

150

116

122,126

**Fig. 8**

**EP 2 300 728 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2879092 A